(19) Europäisches Patentamt
European Patent Office
Office européen des brevets

(11) EP 4 075 166 A1

(12) EUROPEAN PATENT APPLICATION
published in accordance with Art. 153(4) EPC

(43) Date of publication:
19.10.2022 Bulletin 2022/42

(51) International Patent Classification (IPC):
G01S 17/93 $^{(2020.01)}$    G02B 5/20 $^{(2006.01)}$

(21) Application number: 19950821.9

(52) Cooperative Patent Classification (CPC):
G01S 17/93; G02B 5/20

(22) Date of filing: 31.10.2019

(86) International application number:
PCT/CN2019/114873

(87) International publication number:
WO 2021/081947 (06.05.2021 Gazette 2021/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Huawei Technologies Co., Ltd.
Longgang
Shenzhen, Guangdong 518129 (CN)

(72) Inventors:
• YAN, Lei
  Shenzhen, Guangdong 518129 (CN)
• XIE, Chengzhi
  Shenzhen, Guangdong 518129 (CN)
• XIONG, Wei
  Shenzhen, Guangdong 518129 (CN)

(74) Representative: Thun, Clemens
Mitscherlich PartmbB
Patent- und Rechtsanwälte
Sonnenstraße 33
80331 München (DE)

(54) **RADAR SYSTEM, FILTER AND MOBILE PLATFORM**

(57) A radar system, a filter, and a mobile platform are provided. The radar system includes a filter, the filter includes an image-space telecentric optical assembly, a lens structure, and a narrow-band optical filter. A received optical signal enters the filter from the image-space telecentric optical assembly. The filter further includes an incident angle adjustment worktable, and the incident angle adjustment worktable is drivenly connected to the lens structure or the narrow-band optical filter, and further includes a controller connected to the incident angle adjustment worktable. The controller controls, based on a wavelength of a light ray emitted by an optical signal transmitter of the radar system, the incident angle adjustment worktable to adjust an incident angle of the optical signal incident on the narrow-band optical filter. Therefore, the light ray emitted by the optical signal transmitter can pass through the narrow-band optical filter and be received by the photoelectric detector. The radar system can monitor a wavelength emitted by the optical signal transmitter. When the wavelength emitted by the optical signal transmitter is changed, an optical signal receiver can still receive an optical signal emitted by the optical signal transmitter.

FIG. 7

Description

TECHNICAL FIELD

This application relates to the field of optical detection technologies, and in particular, to a radar system, a filter, and a mobile platform.

BACKGROUND

A laser radar (light detection and ranging, LiDAR) system is a light detection system that detects features such as a position and a speed of a target by emitting a laser signal. The laser radar system includes an optical signal transmitter and an optical signal receiver. A working principle of the laser radar system is as follows: The optical signal transmitter transmits a detection signal (laser signal) to a target object (for example, an obstacle, a vehicle, an airplane, or a missile), the optical signal receiver receives a signal (a target light ray) reflected from the target object, and then the received target light ray and the emitted laser signal are compared and processed, to obtain related information of the target object, including parameters such as a distance, an orientation, a height, a speed, a posture, and even a shape that are of the target, so as to detect, track, and recognize the target object.

As autonomous-driving technologies of vehicles develop continuously, there are increasing demands for a higher autonomous-driving level. Therefore, an in-vehicle sensing system is required to effectively detect, identify, and classify various complex road conditions. As one of the most important autonomous-driving technologies, radar systems are developing towards higher resolution (> 100 lines), a larger field of view (> 120°), and a longer detection distance (> 200 m), which has become an increasingly evident trend.

In the conventional technology, an optical signal receiver of a radar system uses an avalanche photodiode (APD) as a receiver, and the APD has advantages such as low processing costs and resistance to ambient light. However, because the APD requires a special high-voltage silicon process and is not compatible with a conventional CMOS process, the APD does not support large-scale circuit integration. In addition, when a maximum power of a laser radar is limited due to factors such as human eye safety, an approximately 100-fold gain of the APD detector is insufficient to support a higher resolution requirement.

Beyond that, when being used as a receiver of an optical signal receiver, a single-photon avalanche detector (SPAD) has a nearly 106-fold gain and is compatible with the CMOS process, which makes a near-megapixel SPAD image sensor ready to appear. In addition, the SPAD detector has better consistency and temperature characteristics. However, a dynamic range of the SPAD detector is severely limited because the SPAD detector works in Geiger mode (106-fold gain). As a result, the SPAD is extremely sensitive to ambient light and even cannot be used normally under strong sunlight. Suppression of ambient light has become the biggest bottleneck for development of SPAD laser radars.

To solve a problem that an optical signal received by the SPAD tends to be suppressed by ambient light, the ambient light needs to be removed from the optical signal received by the SPAD, and a target light ray that needs to be received by the optical signal receiver is reserved. In the conventional technology, an ultra-narrow-band optical filter is used to filter out light with a non-signal wavelength. However, after the ultra-narrow-band optical filter is set, only a target light ray with a specified wavelength can pass through the ultra-narrow-band optical filter and be received by the SPAD. A wavelength of a laser signal emitted by a laser of a radar system is changed significantly with a temperature. Therefore, a wavelength of a target light ray generated by reflecting the emitted laser signal by a target object is also changed. In the conventional technology, in order to ensure operation of the ultra-narrow-band optical filter, a complex and large cooling and temperature control component is disposed on a laser side of a laser radar, so that a wavelength of a laser signal emitted by the laser is stable, a target light ray generated by reflecting the laser signal by a target object has a specified wavelength, and the target light ray can pass through the ultra-narrow-band optical filter and be received by the SPAD. However, this solution has some disadvantages: In one aspect, a control circuit and a control algorithm are complex; in another aspect, a volume and energy consumption of the entire radar system are increased, which is not conducive to a miniaturized design of system integration.

SUMMARY

Embodiments of this application provide a radar system, a filter, and a mobile platform, to adjust, in real time based on an incident target light ray, an incident angle of incident light incident on a narrow-band optical filter, so that the target light ray incident on the narrow-band optical filter passes through the narrow-band optical filter. Therefore, a photoelectric detector accurately receives the target light ray reflected from a target object. Specifically, impact of a temperature on a wavelength of a detection light ray emitted by an optical signal transmitter of a radar system can be overcome, so that a temperature control apparatus may not be disposed in the radar system, reducing a volume and energy consumption of the radar system, and improving sensitivity and resolution of the radar system.

According to a first aspect, an embodiment of this application provides a radar system. The radar system includes an optical signal transmitter and an optical signal receiver. The optical signal transmitter may include a laser and a collimating lens unit, and is configured to emit detection light rays. The optical signal receiver includes a filter and a photoelectric detector. The detection light rays emitted by the optical signal transmitter become first light rays after being reflected by an obstacle, and the first light rays are incident to the filter and received by the photoelectric detector. The filter includes an image-space telecentric optical assembly, a lens structure, and a narrow-band optical filter that are successively disposed. The first light rays are incident to the filter, and pass through the image-space telecentric optical assembly, the lens structure, and the narrow-band optical filter in sequence. The photoelectric detector is located on a side that is of the narrow-band optical filter and that is away from the lens structure, and is configured to receive target light rays that pass through the narrow-band optical filter, that is, third light rays. The image-space telecentric optical assembly is configured to refract the first light rays incident to the image-space telecentric optical assembly into second light rays whose chief ray is parallel to an optical axis of the image-space telecentric optical assembly. The lens structure is configured to refract the second light rays incident to the lens structure into parallel third light rays. The narrow-band optical filter is configured to filter the third light rays, to implement a filtering function of the filter, so that the third light rays are received by the photoelectric detector. At least one of the lens structure or the narrow-band optical filter in the filter is an adjustable structure, and is configured to enable, based on information about the third light rays, the third light rays to pass through the narrow-band optical filter. The radar system may determine, based on a user requirement, a light ray that needs to pass through the filter, so that the light ray can pass through the filter. This improves use flexibility of the filter.

The radar system may further include a controller. The controller is configured to control the adjustable structure in the lens structure and the narrow-band optical filter based on a wavelength of the detection light ray, that is, a wavelength of the first light ray, to adjust an incident angle of the third light ray incident on the narrow-band optical filter, so that the third light ray can pass through the narrow-band optical filter and be received by the photoelectric detector. The radar system may determine a wavelength of the third light ray based on the wavelength of the detection light ray emitted by the optical signal transmitter. The wavelength of the third light ray is the same as the wavelength of the detection light ray. The controller may adjust, based on the wavelength of the third light ray, the incident angle of the third light ray incident on the narrow-band optical filter, so that the third light ray can pass through the narrow-band optical filter and be received by the photoelectric detector, so that the radar system keeps in a working state. In this solution, there is no need to dispose a temperature control apparatus in the radar system, which reduces a volume and energy consumption of the radar system, and improves sensitivity and resolution of the radar system.

The radar system further includes an incident angle adjustment worktable. The incident angle adjustment platform is coupled to the adjustable structure in the lens structure and the narrow-band optical filter, to control, based on the wavelength of the detection light ray, the incident angle adjustment platform to adjust the incident angle of the third light ray incident on the narrow-band optical filter, so as to adapt to a characteristic of the narrow-band optical filter, so that the third light ray passes through the narrow-band optical filter. Therefore, the radar system may determine, based on a user requirement, the wavelength of the third light ray that needs to pass through the filter, and adjust the incident angle of the third light ray, to improve use flexibility of the filter. Specifically, the incident angle adjustment worktable may be directly drivenly connected to the narrow-band optical filter to drive the narrow-band optical filter to deflect, to adjust a setting angle of the narrow-band optical filter, so as to adjust the incident angle of the third light ray. Alternatively, the incident angle adjustment platform may be drivenly connected to the lens structure, to adjust an offset or a focal length of the lens structure, so as to adjust an emergent angle of the third light ray exiting from the lens structure (that is, the incident angle of the third light ray incident on the narrow-band optical filter).

When the radar system is specifically disposed, the radar system may include a temperature sensor. The temperature sensor is disposed in the optical signal transmitter, and is configured to detect a temperature of the detection light ray emitted by the optical signal transmitter, to obtain the wavelength of the detection light ray emitted by the optical signal transmitter. The controller is coupled to the temperature sensor and the incident angle adjustment worktable. The controller calculates, based on the temperature measured by the temperature sensor, the wavelength of the detection light ray emitted by the optical signal transmitter, to obtain the wavelength of the third light ray, and then controls the incident angle adjustment worktable to adjust the incident angle of the third light ray incident on the narrow-band optical filter, so that the third light ray passes through the narrow-band optical filter at a specified wavelength and is received by the photoelectric detector.

When the incident angle adjustment platform is specifically disposed, the lens structure may be an adjustable structure, and the lens structure can shift along a plane perpendicular to the optical axis of the image-space telecentric optical assembly. When a central axis of the lens structure shifts, an angle of an emergent light ray passing through the lens structure may be changed, so that the incident angle of the third light ray incident on the narrow-band optical filter is adjusted.

In another specific technical solution, the lens structure may be a liquid zoom lens. In other words, a focal length of the liquid zoom lens may be adjusted by changing a structure of the liquid zoom lens. The lens structure may adjust a focal length, so that an angle of an emergent light ray passing through the lens structure can be adjusted, so that the incident angle of the third light ray incident on the narrow-band optical filter is adjusted.

A structure of the lens is not specifically limited, and may be one lens, two lenses, a plurality of lenses, or a microlens array, which may be selected and designed by a user based on a requirement.

In another specific technical solution, the narrow-band optical filter may be an adjustable structure, and the narrow-band optical filter may be deflected to form a specified angle with the lens structure, so that the incident angle of the third light ray incident on the narrow-band optical filter can also be adjusted without adjusting an incident light ray.

When the foregoing incident angle adjustment worktable is specifically disposed, a specific structure of the incident angle adjustment worktable is not limited. For example, the incident angle adjustment worktable may be an electromagnetic micro-displacement worktable or a piezoelectric ceramic micro-displacement worktable. Both the foregoing two types of incident angle adjustment worktables may be driven by using electricity, which helps to use the controller to automatically control the incident angle adjustment worktable to perform an action, and can implement micro-displacement adjustment.

In an optional technical solution, a type of the foregoing photoelectric detector may not be limited. A detector that can receive light is applicable to the optical signal receiver in the technical solutions of this application. Specifically, the photoelectric detector may be a single-photon avalanche detector, a visible-light detector, a near-infrared photodetector, or a far-infrared photodetector.

In a specific technical solution, the image-space telecentric optical assembly includes a lens and a diaphragm. The lens structure may be a microlens array. The microlens array includes a plurality of microlenses, the diaphragm includes a plurality of light-transmitting holes, the microlenses are in a one-to-one correspondence with the light-transmitting holes, and the microlenses are in a one-to-one correspondence with channel visual fields of the photoelectric detector. This solution facilitates receiving of an optical signal by the channel visual field of the photoelectric detector, to improve detection precision of the photoelectric detector.

According to a second aspect, this application further provides a filter. The filter includes an image-space telecentric optical assembly, a lens structure, and a narrow-band optical filter that are successively disposed. First light rays are incident to the filter, and pass through the image-space telecentric optical assembly, the lens structure, and the narrow-band optical filter in sequence. The image-space telecentric optical assembly is configured to refract the first light rays incident to the image-space telecentric optical assembly into second light rays whose chief ray is parallel to an optical axis of the image-space telecentric optical assembly. The lens structure is configured to refract the second light rays incident to the lens structure into parallel third light rays. The narrow-band optical filter is configured to filter the third light rays, to implement a filtering function of the filter, so that the third light rays are received by the photoelectric detector. At least one of the lens structure or the narrow-band optical filter in the filter is an adjustable structure, and is configured to enable, based on information about the third light rays, the third light rays to pass through the narrow-band optical filter. The filter may determine, based on a user requirement, the light rays that need to pass through the narrow-band optical filter, so that the third light rays can pass through the filter. This improves use flexibility of the filter.

The filter may further include a controller. The controller is configured to control the adjustable structure in the lens structure and the narrow-band optical filter based on a wavelength of the third light ray, to adjust an incident angle of the third light ray incident on the narrow-band optical filter, so that the third light ray can pass through the narrow-band optical filter. The filter may determine, based on a requirement, the wavelength of the third light ray passing through the narrow-band optical filter. The wavelength of the third light ray is the same as a wavelength of a detection light ray. The controller may adjust, based on the wavelength of the third light ray, an incident angle of the third light ray incident on the narrow-band optical filter, so that the third light ray can pass through the narrow-band optical filter.

The filter further includes an incident angle adjustment worktable. The incident angle adjustment platform is coupled to the adjustable structure in the lens structure and the narrow-band optical filter, to control, based on the wavelength of the detection light ray, the incident angle adjustment platform to adjust the incident angle of the third light ray incident on the narrow-band optical filter, so as to adapt to a characteristic of the narrow-band optical filter, so that the third light ray passes through the narrow-band optical filter. Therefore, the filter may determine, based on a user requirement, the wavelength of the third light ray that needs to pass through the filter, and adjust the incident angle of the third light ray, to improve use flexibility of the filter. Specifically, the incident angle adjustment worktable may be directly drivenly connected to the narrow-band optical filter to drive the narrow-band optical filter to deflect, to adjust a setting angle of the narrow-band optical filter, so as to adjust the incident angle of the third light ray. Alternatively, the incident angle adjustment platform may be drivenly connected to the lens structure, to adjust an offset or a focal length of the lens structure, so as to adjust an emergent angle of the third light ray exiting from the lens structure (that is, the incident angle of the third light ray incident on the narrow-band optical filter).

According to a third aspect, this application further provides a mobile platform. The mobile platform includes an information processing system and any one of the foregoing radar systems. The information processing system is configured to determine feature information of a target object based on a detection light ray emitted by the optical signal transmitter in the radar system and a third light ray received by the optical signal receiver. The third light ray is a light ray generated when the detection light ray reaches the target object and is reflected by the target object. The feature information includes but is not limited to a distance between the target object and the mobile platform, and an orientation and a height of the target object, and information such as a moving speed, a posture, and even a shape of the target object. Specifically, the information processing system may accurately measure a propagation time of the detection light ray emitted by the optical signal transmitter from being emitted to being reflected by the target object back to the optical signal receiver. Because a speed of light is known, the propagation time may be converted into a measurement of a distance, so as to determine a distance from the radar system to the target object.

The mobile platform may further include an electronic control system coupled to the information processing system. The electronic control system is configured to control a motion status of the mobile platform based on the feature information that is of the target object and that is generated by the information processing system.

Specifically, the electronic control system may include a communications interface, and communicate with the information processing system through the communications interface. The electronic control system is configured to control the motion status (such as a speed and a motion direction) of the mobile platform based on the feature information of the target object.

A specific type of the mobile platform is not limited, and the mobile platform may be any one of a vehicle, a ship, an airplane, a spacecraft, a train, or an uncrewed aerial vehicle. Any device that needs to be equipped with a radar system may use the radar system in embodiments of this application.

**BRIEF DESCRIPTION OF DRAWINGS**

FIG. 1 is a schematic diagram of a usage status of a radar system of a mobile platform according to an embodiment of this application;

FIG. 2 is a schematic diagram of a principle of detecting a target object by a radar system according to an embodiment of this application;

FIG. 3 is a schematic diagram of a structure of an optical signal receiver according to an embodiment of this application;

FIG. 4 is a diagram of a relationship between an incident angle of incident light and a wavelength that are of a narrow-band optical filter according to an embodiment of this application;

FIG. 5 is a diagram of a relationship between a temperature of a laser and a wavelength of an emitted light ray according to an embodiment of this application;

FIG. 6 is a diagram of a relationship between an offset of a central axis of a lens structure and an incident angle of incident light incident on a narrow-band optical filter according to an embodiment of this application;

FIG. 7 is a schematic diagram of a structure in which an incident angle adjustment worktable of a filter drives a lens structure to shift according to an embodiment of this application;

FIG. 8 is a schematic diagram of a structure in which an incident angle adjustment worktable of a filter drives a narrow-band optical filter to deflect according to an embodiment of this application;

FIG. 9a to FIG. 9c are schematic diagrams of a direct piezoelectric effect process of a piezoelectric material;

FIG. 10a to FIG. 10c are schematic diagrams of an inverse piezoelectric effect process of a piezoelectric material;

FIG. 11 is a schematic diagram of a structure of a radar system according to an embodiment of this application; and

FIG. 12 is a schematic diagram of a structure of a mobile platform according to an embodiment of this application.

Reference numerals:

| | |
|---|---|
| 100-Radar system; | 110-Optical signal transmitter; |
| 120-Optical signal receiver; | 200-Target object; |
| 1-Filter; | 11-Image-space telecentric optical assembly; |
| 111-Lens; | 112-Diaphragm; |
| 1121-Light-transmitting hole; | 12-Lens structure; |
| 13-Narrow-band optical filter; | 14-Incident angle adjustment worktable; |
| 2-Photoelectric detector; | 21-Channel visual field; |
| 3-Controller; | 4-Temperature sensor; |
| 01-First light ray; | 02-Second light ray; |
| 021-Chief ray; | 022-Scattered light ray; |
| 03-Third light ray; | 300-Mobile platform; |

(continued)

310-Information processing system;     and 320-Electronic control system

**DESCRIPTION OF EMBODIMENTS**

To make the objectives, technical solutions, and advantages of this application clearer, the following further describes this application in detail with reference to the accompanying drawings.

A filter provided in this application may be mainly applied to an optical detection system such as an optical signal receiver in a radar system, particularly applied to an in-vehicle sensing system in a vehicle self-driving technology. A radar system generally works by transmitting a high-frequency electromagnetic wave and receiving electromagnetic energy scattered by a target. A received target light ray and an emitted detection light ray are compared and analyzed, to extract information related to the target object, for example, a distance, an orientation, a height, a speed, a posture, and even a shape of the target object.

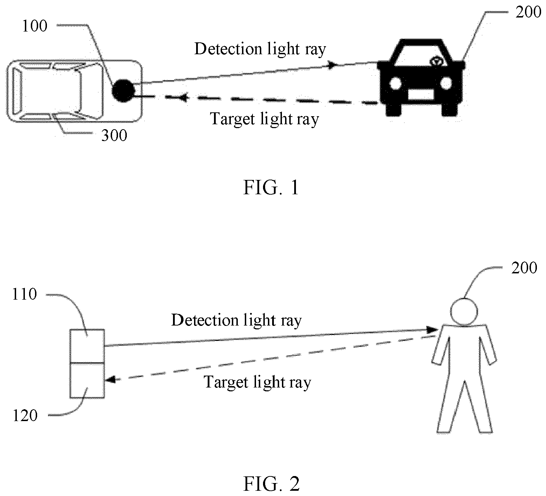

As shown in FIG. 1 and FIG. 2, FIG. 1 is a schematic diagram of a usage status of a radar system of a mobile platform according to an embodiment of this application. FIG. 2 is a schematic diagram of a principle of detecting a target object by a radar system according to an embodiment of this application. A radar system 100 includes an optical signal transmitter 110 and an optical signal receiver 120. The optical signal transmitter 110 may include a laser and a collimating lens unit. A detection light ray is emitted by using the laser. If there is a target object 200 within a specific distance along a transmission direction of the detection light ray, the detection light ray is reflected by a surface of the target object 200. In FIG. 1 and FIG. 2, an example in which there is a target object 200 (for example, a car in FIG. 1 and a pedestrian in FIG. 2) in a transmission direction of a detection light ray is used. After reaching the target object 200, the detection light ray emitted by the laser is reflected by a surface of the target object 200, and a reflected signal is returned to the optical signal receiver 120 as a target light ray. The optical signal receiver 120 may compare the received target light ray with the emitted detection light ray, to determine information related to the target object 200, for example, a distance, an orientation, a height, a speed, a posture, and even a shape of the target object 200.

In this application, the radar system 100 may be applied to various mobile platforms, such as a car, a ship, an airplane, a train, a spacecraft, and other mobile platforms. A common radar system includes a scanning laser radar and a non-scanning laser radar. The scanning radar system is, for example, a frequency-modulated continuous waveform (frequency-modulated continuous waveform, FMCW) laser radar based on a micro-electro-mechanical system (micro-electro-mechanical system, MEMS), and an FMCW laser radar based on an optical phased array (optical phased array, OPA) technology. The non-scanning radar system is, for example, a Flash laser radar based on pulsed time-of-flight (time-of-flight, TOF). The Flash laser radar may directly emit, in a short time, a plurality of laser signals that cover a detection region, and then use a highly-sensitive receiver to complete drawing of an image of the environment target object 200.

Currently, a photoelectric detector of the optical signal receiver 120 in the radar system may be a single-photon avalanche diode (SPAD). The SPAD has a relatively high resolution, but a receiving effect is suppressed by ambient light. Currently, to solve a problem that an optical signal received by the SPAD tends to be suppressed by ambient light, an ambient light signal needs to be removed from the optical signal received by the SPAD, and a target light ray that needs to be received by the optical signal receiver is reserved. In the conventional technology, an ultra-narrow-band optical filter is used to filter out a light ray with a non-signal wavelength. However, after the ultra-narrow-band optical filter is set, only a target light ray with a specified wavelength can pass through the ultra-narrow-band optical filter and be received by the SPAD. A wavelength of a laser signal emitted by the optical signal transmitter of the radar system changes significantly with a temperature. Therefore, a wavelength of a target light ray generated by reflecting the emitted laser signal by a target object also changes. In order to ensure operation of the ultra-narrow-band optical filter, the target light ray incident on the ultra-narrow-band optical filter needs to be enabled to pass through the ultra-narrow-band optical filter. In the conventional technology, a complex and large cooling and temperature control component is disposed on a laser side of a laser radar, so that a wavelength of a detection light ray emitted by the laser is stable, a target light ray generated by reflecting the detection light ray by a target object has a specified wavelength, and the target light ray can pass through the ultra-narrow-band optical filter and be received by the SPAD. However, this solution has some disadvantages: in one aspect, a control circuit and a control algorithm are complex; in another aspect, a volume and energy consumption of the entire radar system are increased, which is not conducive to a miniaturized design of radar system integration. To resolve this problem, this application provides a radar system and a mobile platform including the radar system.

The following describes in detail embodiments of this application with reference to the accompanying drawings. Terms used in the following embodiments are merely intended to describe specific embodiments, but are not intended to limit this application. Terms "one", "a", "the", "the foregoing", "this", and "the one" of singular forms used in this specification and the appended claims of this application are also intended to include plural forms like "one or more", unless otherwise specified in the context clearly.

Reference to "one embodiment" or "some embodiments" described in this specification or the like means that one or more embodiments of this application include a particular feature, structure, or characteristic described in combination with the embodiment. Therefore, in this specification, statements, such as "in an embodiment", "in some embodiments", "in some other embodiments", and "in other embodiments", that appear at different places in this specification do not necessarily mean reference to a same embodiment, instead, they mean "one or more but not all of the embodiments", unless otherwise specifically emphasized. The terms "include", "comprise", "have", and their variants all mean "include but is not limited to", unless otherwise specifically emphasized.

Still refer to FIG. 2. The radar system 100 includes an optical signal transmitter 110 and an optical signal receiver 120. The optical signal transmitter 110 may include a laser and a collimating lens unit, and is configured to emit a detection light ray. After the detection light ray encounters a target object, a first light ray is reflected. The first light ray is a target light ray to be received by the optical signal receiver 120. The radar system 100 further includes a controller. The controller may compare the detection light ray emitted by the optical signal transmitter 110 with the first light ray, to obtain information about the target object.

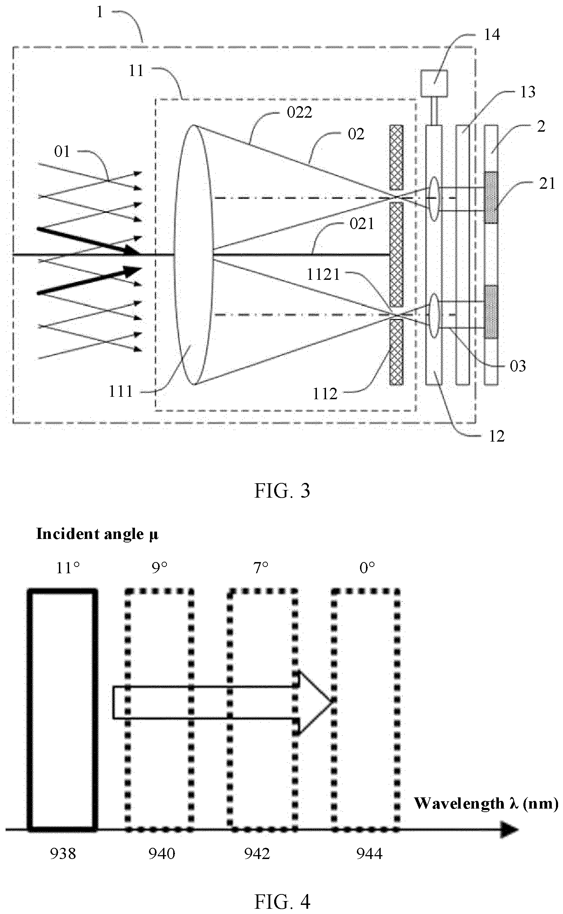

Specifically, FIG. 3 is a schematic diagram of a structure of an optical signal receiver according to an embodiment of this application. The optical signal receiver 120 provided in this embodiment of this application includes a filter 1 and a photoelectric detector 2. The filter 1 includes an image-space telecentric optical assembly 11, a lens structure 12, and a narrow-band optical filter 13 that are successively disposed. The photoelectric detector 2 is disposed on a side that is of the narrow-band optical filter 13 and that is away from the lens structure 12. First light rays 01 received by the optical signal receiver 120 are incident from the image-space telecentric optical assembly 11, and the image-space telecentric optical assembly 11 refracts the first light rays 01 into second light rays 02 whose chief ray 021 is parallel to an optical axis. The optical axis refers to an optical axis of the image-space telecentric optical assembly 11, and the second light rays 02 include the chief ray 021 and scattered light rays 022 distributed around the chief ray 022. The second light rays 02 are incident into the lens structure 12, and the lens structure 12 refracts the second light rays 02 (the chief ray 021 and the scattered light rays 022) into parallel third light rays 03. The third light ray 03 and the narrow-band optical filter 13 form a specified incident angle, so that the third light ray 03 can pass through the narrow-band optical filter 13 and be received by the photoelectric detector 2. At least one of the lens structure 12 and the narrow-band optical filter 13 is an adjustable structure. The adjustable structure in the lens structure 12 and the narrow-band optical filter 13 is adjusted, so that the third light rays 03 can pass through the narrow-band optical filter 13 and be received by the photoelectric detector 2, ensuring normal operation of the radar system. In this embodiment of this application, a detection light ray emitted by the optical signal transmitter 110 of the radar system 100 is reflected by a target object and changed into a target light ray, and the target light ray is received by the optical signal receiver 120. The radar system 100 may adjust the adjustable structure in the lens structure 12 and the narrow-band optical filter 13 that are in the filter 1 based on monitoring the detection light ray emitted by the optical signal transmitter 110, so that the detection light ray emitted by the optical signal transmitter 110 can pass through the filter 1 and be received by the photoelectric detector 2 even if the detection light ray is changed. Therefore, working environments of the radar system are various.

In a specific implementation, only the lens structure 12 may be adjusted, only the narrow-band optical filter 13 may be adjusted, or both the lens structure 12 and the narrow-band optical filter 13 may be adjusted. This is not specifically limited in this application.

In a specific implementation of the technical solutions of this application, the radar system may further include a controller (not shown in the figure). The controller controls the adjustable structure in the lens structure 12 and the narrow-band optical filter 13 based on a wavelength of the detection light ray emitted by the optical signal transmitter, to adjust an incident angle of the third light ray 03 incident on the narrow-band optical filter 13, so that the third light ray 03 passes through the narrow-band optical filter 13, and is received by the photoelectric detector 2.

The image-space telecentric optical assembly 11 includes a lens 111 and a diaphragm 112. The diaphragm 122 is located on an object-space focal plane of the lens 11, and an exit pupil of the diaphragm 122 is located at an infinite distance. The chief ray 021 of the second light rays 02 obtained by refracting the first light rays 01 with different incident angles by the image-space telecentric optical assembly 11 is parallel to the optical axis, to implement normalization of emergent angles. When the lens structure 12 is specifically disposed, a focus that is of the lens structure 12 and that faces the image-space telecentric optical assembly 11 may coincide with a focus that is of the image-space telecentric optical assembly 11 and that faces the lens structure 12. The lens structure 12 may convert the second light rays 02 incident on the lens structure into parallel light, to form the third light rays 03, and the third light rays 03 pass through the narrow-band optical filter 13, and are received by the photoelectric detector 2.

FIG. 4 is a diagram of a relationship between an incident angle of incident light and a center wavelength that are of a narrow-band optical filter according to an embodiment of this application. When the narrow-band optical filter 13 performs filtering, the relationship between the center wavelength of the narrow-band optical filter 13 and the incident angle of the incident light incident on the narrow-band optical filter 13 satisfies:

$$\lambda = \lambda_0 \sqrt{1 - (\sin\mu)^2 / N^2}$$

$\lambda$ is a center wavelength when an incident angle of a light ray incident on the narrow-band optical filter 13 is $\mu$, $\lambda_0$ is a center wavelength when an incident angle of a light ray incident on the narrow-band optical filter 13 is 0, $\mu$ is an incident angle of incident light incident on the narrow-band optical filter 13, and N is an equivalent refractive index of the narrow-band optical filter 13. Based on FIG. 4 and the foregoing formula, a relationship between the center wavelength $\lambda$ passing through the narrow-band optical filter 13 and the incident angle $\mu$ of the incident light incident on the narrow-band optical filter 13 can be obtained. Therefore, based on the formula, to keep a wavelength of the third light ray 03 the same as the center wavelength of the narrow-band optical filter 13 to enable the photoelectric detector 2 to receive a reflected target light ray, the incident angle $\mu$ of the incident light incident on the narrow-band optical filter 13 may be adjusted based on a wavelength $\lambda_0$ of a detection light ray emitted by the optical signal transmitter 110.

The filter 1 further includes an incident angle adjustment worktable 14. The incident angle adjustment worktable 14 is coupled to the adjustable structure in the lens structure 12 and the narrow-band optical filter 13, and is configured to drive the adjustable structure in the lens structure 12 and the narrow-band optical filter 13, to adjust an incident angle of the third light ray 03 incident on the narrow-band optical filter 13. The incident angle between the third light ray 03 and the narrow-band optical filter 13 can be adjusted by using the incident angle adjustment worktable 14, so that the third light ray 03 can pass through the narrow-band optical filter 13.

In the filter 1, a method for adjusting the incident angle $\mu$ of the incident light incident on the narrow-band optical filter 13 includes: directly adjusting an inclination angle of the narrow-band optical filter 13; and adjusting a focal length of the lens structure 12 or adjusting an offset of a central axis of the lens structure 12 relative to a central axis of a light-transmitting hole 1121 of the diaphragm 112 of the image-space telecentric optical assembly 11.

In a specific embodiment of this application, the narrow-band optical filter 13 in the filter 1 may be the adjustable structure. Specifically, the incident angle adjustment worktable 14 may be directly drivenly connected to the narrow-band optical filter 13, to drive the narrow-band optical filter 13 to deflect, so that the incident angle of the incident light incident on the narrow-band optical filter 13 is adjusted, to adjust the center wavelength of the narrow-band optical filter 13. In this way, the wavelength of the third light ray 03 is the same as the center wavelength of the narrow-band optical filter 13, so that the third light ray 03 can pass through the narrow-band optical filter 13 and be received by the photoelectric detector 2. Alternatively, the lens structure 12 may be the adjustable structure, and the incident angle adjustment worktable 14 may be drivenly connected to the lens structure 12 to adjust an offset of the central axis of the lens structure 12, so that an incident angle of the third light ray 03 incident on the narrow-band optical filter 13 is adjusted, to adjust the center wavelength of the narrow-band optical filter 13. In this way, the wavelength of the third light ray 03 is the same as the center wavelength of the narrow-band optical filter 13, so that the third light ray 03 passes through the narrow-band optical filter 13 and is received by the photoelectric detector 2. In this embodiment of this application, after being reflected by a target object, the detection light ray emitted by the optical signal transmitter 110 of the radar system 100 is received by the optical signal receiver 120. The radar system 100 may adjust the filter based on the wavelength of the detection light ray emitted by the optical signal transmitter 110, so that even if the wavelength of the detection light ray emitted by the optical signal transmitter 110 is changed, the detection light ray can pass through the filter and be received by the photoelectric detector 2.

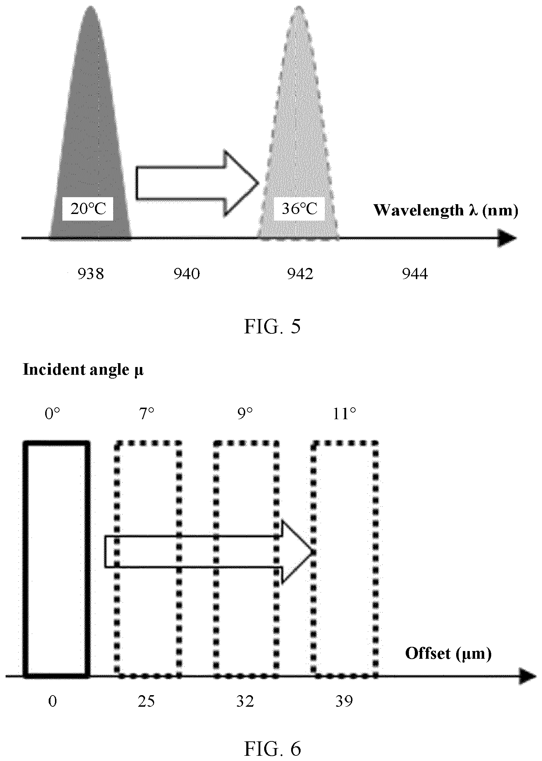

FIG. 5 is a diagram of a relationship between a temperature of a laser of an optical signal transmitter and a wavelength of an emitted light ray according to an embodiment of this application. It can be learned that, as a temperature of the optical signal transmitter 110 is increased, a wavelength of an emitted detection light ray is longer, that is, a wavelength of a detection light ray emitted by the optical signal transmitter 110 is longer. Therefore, the wavelength of the detection light ray emitted by the optical signal transmitter 110 may be determined based on the temperature of the laser, and then an incident angle $\mu$ of incident light incident on the narrow-band optical filter 13 is adjusted, so that a third light ray 03 that is obtained after the light ray emitted by the optical signal transmitter 110 is reflected by a target object is received by the optical signal receiver 120.

In embodiments of this application, the filter 1 includes the incident angle adjustment worktable 14, and the incident angle $\mu$ of the incident light incident on the narrow-band optical filter 13 may be adjusted based on the wavelength of the detection light ray emitted by the optical signal transmitter 110, so that after being reflected by the target object, the detection light ray emitted by the optical signal transmitter 110 can pass through the narrow-band optical filter 13 and be received by the optical signal receiver 120. The radar system 100 using the filter 1 in embodiments of this application imposes a small limitation on the wavelength of the detection light ray emitted by the laser of the optical signal transmitter 110, and can adjust, in real time, the incident angle $\mu$ of the incident light incident on the narrow-band optical filter 13, so that the third light ray 03 can pass through the narrow-band optical filter 13, and the photoelectric detector 2 can accurately receive the third light ray 03 that is reflected back. Specifically, impact of a temperature on the wavelength of the detection light ray emitted by the optical signal transmitter 110 of the radar system 100 can be overcome, so that a temperature control apparatus may not be disposed in the radar system 100, reducing a volume and energy consumption of the radar system 100, and improving sensitivity and resolution of the radar system 100.

In an embodiment, when the lens structure 12 is specifically disposed, the lens structure 12 may be one lens, two lenses, a plurality of lenses, or a lens array. Specifically, a proper type of the lens structure 12 may be selected based on a requirement. This is not specifically limited in this application.

In a specific embodiment, a specific manner in which the incident angle adjustment worktable 14 adjusts the incident angle of the incident light incident on the narrow-band optical filter 13 is not limited. For example, an adjustment manner shown in the following embodiment may be included.

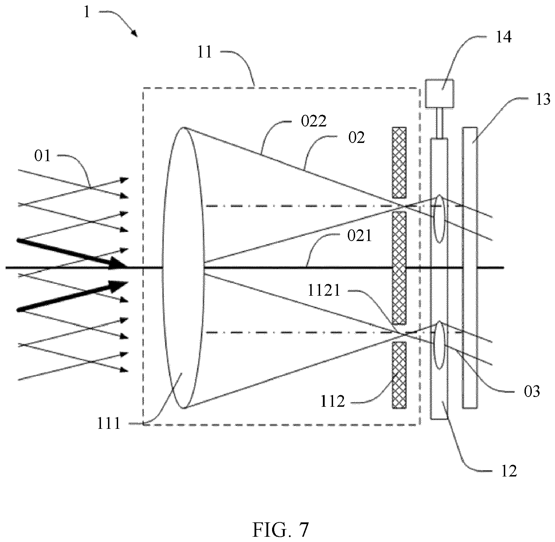

FIG. 6 is a diagram of a relationship between an offset of a central axis of a lens structure and an incident angle of incident light incident on a narrow-band optical filter. As the offset of the central axis of the lens structure 12 is increased, the incident angle of the incident light incident on the narrow-band optical filter 13 is increased. FIG. 7 is a schematic diagram of a structure in which an incident angle adjustment worktable 14 of a filter drives a lens structure to shift. In this solution, the incident angle adjustment worktable 14 is drivenly connected to the lens structure 12, to drive the lens structure 12 to shift along a plane perpendicular to a chief ray 021 of the image-space telecentric optical assembly 11. Therefore, an offset between the central axis of the lens structure 12 and the central axis of the light-transmitting hole 1121 of the diaphragm 112 of the image-space telecentric optical assembly 11 may be adjusted, so that an incident angle of a third light ray 03 incident on the narrow-band optical filter 13 is adjusted, and further the third light ray 03 passes through the narrow-band optical filter 13.

In another embodiment, when the lens structure 12 is specifically disposed, the lens structure 12 may alternatively be a liquid zoom lens, and the liquid zoom lens is a lens structure that can adjust a focal length. The incident angle adjustment worktable 14 in embodiments of this application may alternatively be drivenly connected to the lens structure 12, to drive the lens structure 12 to adjust the focal length. Therefore, an incident angle of a third light ray 03 incident on the narrow-band optical filter 13 is adjusted, and further the third light ray 03 can pass through the narrow-band optical filter 13.

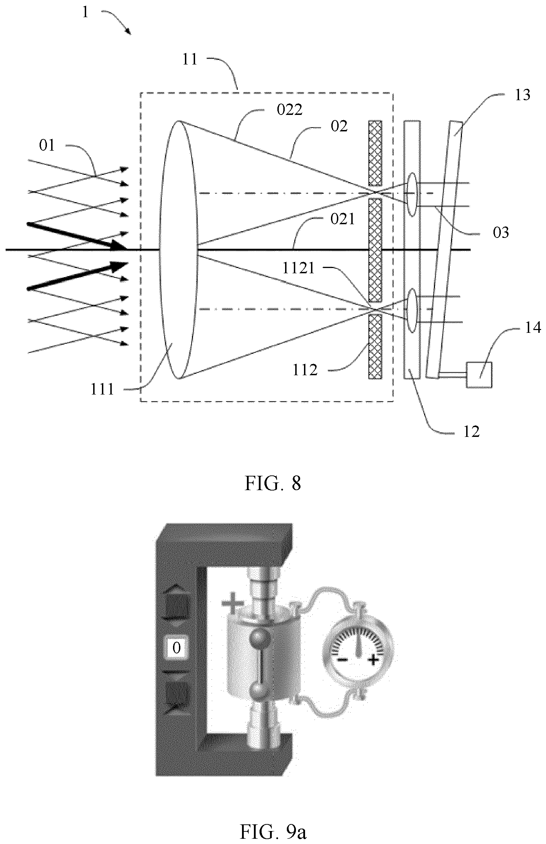

In another embodiment, the incident angle adjustment worktable 14 may be drivenly connected to the narrow-band optical filter 13. FIG. 8 is a schematic diagram of a structure in which an incident angle adjustment worktable 14 of a filter drives a narrow-band optical filter 13 to deflect. The narrow-band optical filter 13 is driven to deflect to form a specified angle with the lens structure 12. Therefore, an incident angle of a third light ray 03 incident on the narrow-band optical filter 13 is adjusted, and further the third light ray 03 can pass through the narrow-band optical filter 13. In this solution, a focal length or an offset of the lens structure 12 may not be adjusted, and the lens structure 12 may not be adjusted after a position of the lens structure 12 is set based on a requirement.

Certainly, in actual application, two or three incident angle adjustment worktables 14 may alternatively be disposed based on a requirement, to adjust the lens structure 12 and the narrow-band optical filter 13 based on a requirement. This is not specifically limited in this application.

A specific type of the incident angle adjustment worktable 14 is not limited in embodiments of this application. For example, the incident angle adjustment worktable 14 may be an electromagnetic micro-displacement worktable, or may be a piezoelectric ceramic micro-displacement worktable. The foregoing two types of incident angle adjustment worktables 14 can implement micro-displacement adjustment and facilitate electrical control of a translation distance, so that the controller can be used to control an adjustment distance of the incident angle adjustment worktable 14.

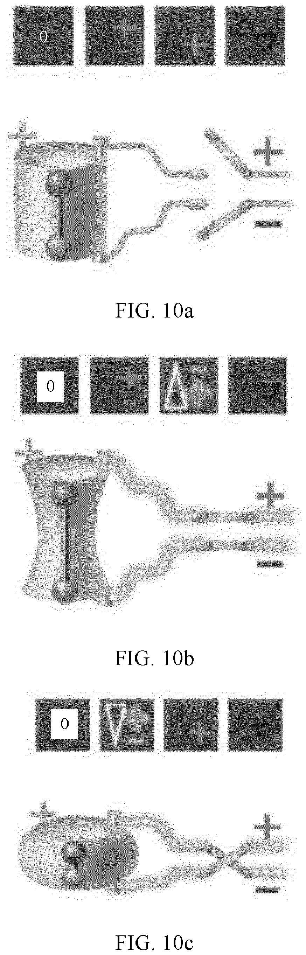

In embodiments of this application, the piezoelectric ceramic micro-displacement worktable uses a piezoelectric effect of a piezoelectric ceramic. Refer to FIG. 9a to FIG. 10c. FIG. 9a to FIG. 9c are schematic diagrams of a direct piezoelectric effect process of a piezoelectric material, and FIG. 10a to FIG. 10c are schematic diagrams of an inverse piezoelectric effect process of a piezoelectric material. A piezoelectric effect of a piezoelectric ceramic includes a direct piezoelectric effect and an inverse piezoelectric effect.

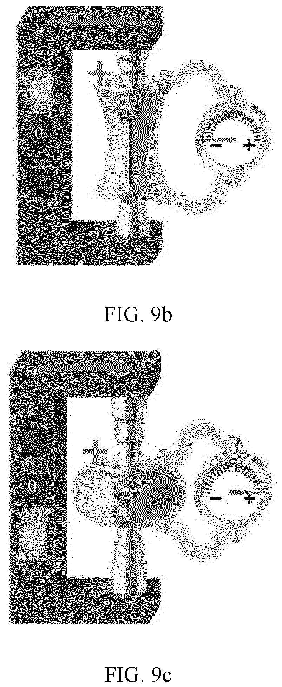

The direct piezoelectric effect means that when the piezoelectric material is subjected to an external stress in a specific direction, positive and negative charges are generated in a polarization direction of the piezoelectric material. Density of the charges is in direct proportion to the external stress. That is, the piezoelectric material generates more charges when the external stress is greater. After the external stress is removed, the material is restored to an uncharged state. FIG. 9a shows a state in which a piezoelectric material is not subjected to an external stress. FIG. 9b shows a state in which when the piezoelectric material is subjected to a stress in a tensile direction, the piezoelectric material generates negative charges. FIG. 9c shows a state in which when the piezoelectric material is subjected to a stress in a compression direction, the piezoelectric material generates positive charges.

The inverse piezoelectric effect means that when an electric field is applied to a polarization direction of a piezoelectric material, the material generates controllable deformation. A deformation variable generated by the piezoelectric material is in direct proportion to strength of the electric field, and the deformation of the material disappears after the electric field is removed. FIG. 10a shows a state of a piezoelectric material when no electric field is applied to the piezoelectric material. FIG. 10b shows a state in which when an electric field in a first direction is applied to the piezoelectric material, the piezoelectric material deforms in a tensile direction. FIG. 10c shows a state in which when an electric field in a second direction is applied to the piezoelectric material, the piezoelectric material deforms in a compression direction. The electric field in the first direction and the electric field in the second direction are opposite in directions. Due to symmetry of properties of a piezoelectric material, a piezoelectric material with a direct piezoelectric effect also has an inverse piezoelectric effect.

In embodiments of this application, the piezoelectric ceramic micro-displacement worktable may use an inverse piezoelectric effect of a piezoelectric ceramic. The piezoelectric ceramic micro-displacement worktable energizes the piezoelectric ceramic, so that the piezoelectric ceramic can deform to generate a micro-displacement, so as to drive the lens structure 12 or the narrow-band optical filter 13.

Still refer to FIG. 3. In this embodiment of this application, the image-space telecentric optical assembly 11 includes the lens 111 and the diaphragm 112. The lens structure 12 of the optical signal receiver 120 is a microlens array. The microlens array includes a plurality of microlenses. The diaphragm 112 includes a plurality of light-transmitting holes 1121. The microlenses are in a one-to-one correspondence with the light-transmitting holes 1121. The photoelectric detector 2 includes a plurality of channel visual fields 21, or may be understood as including a plurality of pixels. The microlenses are in a one-to-one correspondence with the channel visual fields 21 of the photoelectric detector 2, so that the photoelectric detector 2 receives the third light rays 03, improving a working effect of the optical signal receiver 120.

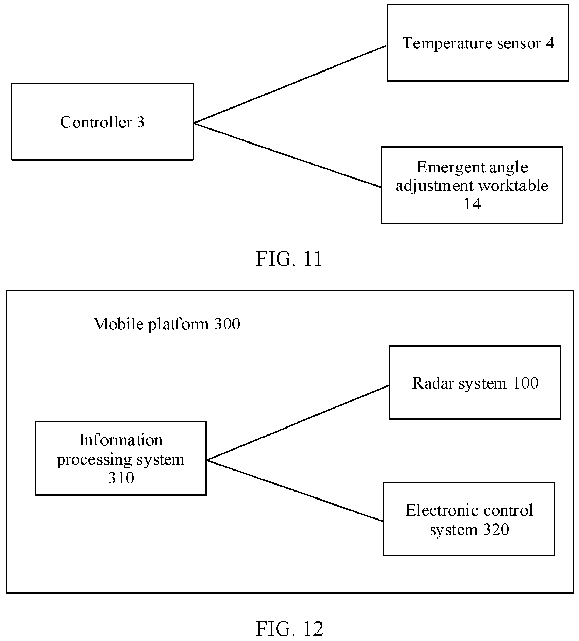

FIG. 11 is a block diagram of a structure of a radar system 100 according to an embodiment of this application. The radar system 100 in this embodiment of this application may further include a temperature sensor 4 and a controller 3. The controller 3 is connected to the temperature sensor 4 and an incident angle adjustment worktable 14. The temperature sensor 4 is disposed in an optical signal transmitter 110, and is configured to monitor a temperature of the optical signal transmitter 110. The controller 3 may determine, based on the temperature measured by the temperature sensor 4, a wavelength of a detection light ray emitted by the optical signal transmitter 110, and control, based on the wavelength, the incident angle adjustment worktable 14 to drive a lens structure 12 or a narrow-band optical filter 13 to perform an action, so as to adjust an incident angle of a third light ray 03 incident on the narrow-band optical filter 13, so that the third light ray 03 can pass through the narrow-band optical filter 13. Therefore, a photoelectric detector 2 of an optical signal receiver 120 can accurately receive the third light ray 03 that is obtained after the detection light ray emitted by the radar system 100 is reflected while not being affected because the detection light ray emitted by the optical signal transmitter of the radar system 100 is changed. In this solution, there is no need to dispose a temperature control apparatus in the optical signal transmitter 110, so that a volume and energy consumption of the radar system 100 can be reduced. The structure of the radar system 100 is simple, and a single-photon avalanche detector (SPAD) may be used as the photoelectric detector 2 of the radar system 100, to improve resolution of the radar system 100.

When the photoelectric detector 2 of the optical signal receiver 120 is specifically disposed, a type of the photoelectric detector 2 may not be limited. For example, in addition to the foregoing single-photon avalanche detector (SPAD), the photoelectric detector 2 may alternatively be a visible-light detector, a near-infrared photodetector, or a far-infrared photodetector, which are all applicable to the technical solutions of this application.

The foregoing filter provided in this application is not necessarily disposed in the radar system 100, and may be alternatively disposed in any apparatus that needs to receive an optical signal, for example, an infrared thermal imaging system, a camera system, a photoelectric tracking system, or an optical fiber communication system. This is not specifically limited in this application.

Based on a same inventive concept, refer to FIG. 1 and FIG. 12. FIG. 12 is a block diagram of a structure of a mobile platform. An embodiment of this application further provides a mobile platform 50. The mobile platform 300 includes an information processing system 310 and the radar system 100 in any one of the foregoing embodiments. The radar system 100 is configured to determine information about a target object 200. For a specific implementation of the radar system 100, refer to the foregoing embodiment. Repeated content is not described again. The information processing system 310 is configured to determine feature information of the target object 200 based on a detection light ray emitted by the optical signal transmitter 110 in the radar system 100 and a target light ray received by the optical signal receiver 120. The target light ray is a third light ray generated when the detection light ray reaches the target object 200 and is reflected by the target object 200. The feature information includes but is not limited to a distance between the target object 200 and the mobile platform 300, and an orientation and a height of the target object 200, and information such as a moving speed, a posture, and even a shape of the target object 200. Specifically, the information processing system 310 may accurately measure a propagation time of the detection light ray emitted by the optical signal transmitter 110 from being emitted to being reflected by the target object 200 back to the optical signal receiver 120. Because a speed of light is known, the propagation time may be converted into a measurement of a distance, so as to determine a distance from the radar system 100 to the target object 200.

In a specific implementation, the information processing system 310 may be a hardware apparatus in various forms, such as a processor, a microprocessor (for example a digital signal processor, DSP), an AI chip (for example, a field programmable gate array, FPGA), and an application-specific integrated circuit (for example, an application-specific integrated circuit, ASIC).

Further, if the optical signal transmitter 110 continuously scans the target object 200 by using the detection light ray, data of all target points on the target object 200 may be obtained. After performing imaging processing on the data, the information processing system 310 may obtain a precise three-dimensional stereoscopic image of the target object 200.

The mobile platform 300 further includes an electronic control system 320 coupled to the foregoing information processing system 310. The electronic control system 320 includes a communications interface, and communicates with the information processing system 310 through the communications interface. The electronic control system 320 is configured to control a motion status of the mobile platform 300 based on the feature information that is of the target object 200 and that is obtained by the information processing system 310.

For example, the mobile platform 300 is an autonomous driving vehicle. The autonomous driving vehicle includes the radar system 100, the information processing system 310, and the electronic control system 320. The electronic control system 320 may be an electronic control unit (electronic control unit, ECU), that is, an in-vehicle computer. When the radar system 100 identifies that an obstacle exists ahead, and the information processing system 310 calculates feature information of the obstacle, the electronic control system 320 may control, based on the feature information of the obstacle and navigation information (such as a map), a drive apparatus of the autonomous driving vehicle to decelerate, stop, or turn around; or when the radar system 100 and the information processing system 310 determine that no obstacle exists, the electronic control system 320 may control, based on information indicating that no obstacle exists, a drive apparatus of the autonomous driving vehicle to travel at a constant speed or travel at an accelerated speed.

In an optional embodiment, a specific type of the mobile platform is not limited. For example, the mobile platform may be a mobile platform such as a vehicle, a ship, an airplane, a train, a spacecraft, or an uncrewed aerial vehicle, which is applicable to the technical solutions of this application. After being reflected by a target object, a detection light ray emitted by the optical signal transmitter of the radar system of the mobile platform is received by the optical signal receiver. The radar system may adjust the filter based on a wavelength of the detection light ray emitted by the optical signal transmitter, so that even if the wavelength of the detection light ray emitted by the optical signal transmitter is changed, the detection light ray can pass through the filter and be received by the photoelectric detector, and the radar system can still work normally.

Specifically, the mobile platform may further include a global positioning system (global positioning system, GPS) apparatus and an inertial measurement unit (inertial measurement unit, IMU) apparatus. A radar may obtain a feature quantity such as a position and a speed of a target object based on measurement data of the GPS apparatus and the IMU apparatus. For example, the radar system may provide geographic position information of the mobile platform by using the GPS apparatus on the mobile platform, and record a posture and steering information of the mobile platform by using the IMU apparatus. After determining a distance of the target object based on a target light ray, the radar system may convert a measurement point of the target object from a relative coordinate system to a position point in an absolute coordinate system based on at least one of the geographic position information provided by the GPS apparatus or the posture and the steering information provided by the IMU apparatus, to obtain geographical position information of the target object. Therefore, the radar system can be applied to the mobile platform.

Obviously, a person skilled in the art can make various modifications and variations to embodiments of this application without departing from the scope of this application. This application is intended to cover these modifications and variations provided that they fall within the scope of protection defined by the following claims and their equivalent technologies.

**Claims**

1.  A radar system, comprising:

   an optical signal transmitter, configured to emit detection light rays;
   an image-space telecentric optical assembly, configured to: receive first light rays obtained after the detection light rays are reflected by a target object, and refract the first light rays into second light rays, wherein a chief ray of the second light rays is parallel to an optical axis of the image-space telecentric optical assembly;
   a lens structure, configured to refract the second light rays into parallel third light rays;
   a narrow-band optical filter, configured to filter the third light rays; and
   a photoelectric detector, configured to receive the third light rays filtered by the narrow-band optical filter, wherein at least one of the lens structure and the narrow-band optical filter is an adjustable structure, and is configured to enable the third light rays to pass through the narrow-band optical filter.

2.  The radar system according to claim 1, further comprising a controller, wherein the controller is configured to control the adjustable structure in the lens structure and the narrow-band optical filter based on a wavelength of the detection light ray, to adjust an incident angle of the third light ray incident on the narrow-band optical filter, so that the third light ray passes through the narrow-band optical filter.

3. The radar system according to claim 2, further comprising a temperature sensor, wherein the temperature sensor is disposed in the optical signal transmitter, and the controller is connected to the temperature sensor, and is configured to control the adjustable structure in the lens structure and the narrow-band optical filter based on a temperature measured by the temperature sensor, to adjust the incident angle of the third light ray incident on the narrow-band optical filter.

4. The radar system according to claim 1, further comprising an incident angle adjustment worktable, wherein the incident angle adjustment worktable is coupled to the adjustable structure in the lens structure and the narrow-band optical filter, and is configured to drive the adjustable structure in the lens structure and the narrow-band optical filter, to adjust an incident angle of the third light ray incident on the narrow-band optical filter.

5. The radar system according to claim 4, wherein the incident angle adjustment worktable is an electromagnetic micro-displacement worktable or a piezoelectric ceramic micro-displacement worktable.

6. The radar system according to claim 1, wherein the lens structure is an adjustable lens structure, and the lens structure can shift along a plane perpendicular to the optical axis of the image-space telecentric optical assembly, to adjust an incident angle of the third light ray incident on the narrow-band optical filter.

7. The radar system according to claim 1, wherein the lens structure is a liquid zoom lens, and the liquid zoom lens can adjust a focal length, to adjust an incident angle of the third light ray incident on the narrow-band optical filter.

8. The radar system according to claim 1, wherein the narrow-band optical filter is an adjustable narrow-band optical filter, and the adjustable narrow-band optical filter can be deflected to form a specified angle with the lens structure, to adjust an incident angle of the third light ray incident on the narrow-band optical filter.

9. The radar system according to claim 1, wherein the image-space telecentric optical assembly comprises a lens and a diaphragm, the lens structure is a microlens array, the microlens array comprises a plurality of microlenses, the diaphragm comprises a plurality of light-transmitting holes, the microlenses are in a one-to-one correspondence with the light-transmitting holes, and the microlenses are in a one-to-one correspondence with channel visual fields of the photoelectric detector.

10. The radar system according to any one of claims 1 to 9, wherein the lens structure is one lens, two lenses, a plurality of lenses, or a microlens array.

11. The radar system according to any one of claims 1 to 9, wherein the photoelectric detector is any one of a single-photon avalanche diode, a visible-light detector, a near-infrared photodetector, or a far-infrared photodetector.

12. A filter, comprising:

an image-space telecentric optical assembly, configured to: receive first light rays, and refract the first light rays into second light rays, wherein a chief ray of the second light rays is parallel to an optical axis of the image-space telecentric optical assembly;
a lens structure, configured to: receive the second light rays, and refract the second light rays into parallel third light rays; and
a narrow-band optical filter, configured to filter the third light rays, wherein
at least one of the lens structure and the narrow-band optical filter is an adjustable structure.

13. The filter according to claim 12, further comprising a controller, wherein the controller is configured to control the adjustable structure in the lens structure and the narrow-band optical filter based on a wavelength of the first light ray, to adjust an incident angle of the third light ray incident on the narrow-band optical filter, so that the third light ray passes through the narrow-band optical filter.

14. The filter according to claim 12, further comprising an incident angle adjustment worktable, wherein the incident angle adjustment worktable is coupled to the adjustable structure in the lens structure and the narrow-band optical filter, and is configured to drive the adjustable structure, to adjust an incident angle of the third light ray incident on the narrow-band optical filter.

15. A mobile platform, comprising an information processing system and the radar system according to any one of claims 1 to 11, wherein
the information processing system is signally connected to the radar system, and is configured to calculate feature information of a target object based on a signal of the radar system.

16. The mobile platform according to claim 15, further comprising an electronic control system, wherein the electronic control system is signally connected to the information processing system, and is configured to control a motion status of the mobile platform based on the feature information that is of the target object and that is generated by the information processing system.

FIG. 1

FIG. 2

FIG. 3

**Incident angle μ**

| 11° | 9° | 7° | 0° |

Wavelength λ (nm)

938    940    942    944

FIG. 4

20°C    36°C    **Wavelength λ (nm)**

938        940        942        944

FIG. 5

**Incident angle μ**

0°        7°        9°        11°

**Offset (μm)**

0        25        32        39

FIG. 6

FIG. 7

FIG. 8

FIG. 9a

FIG. 9b

FIG. 9c

FIG. 10a

FIG. 10b

FIG. 10c

Temperature sensor 4

Controller 3

Emergent angle adjustment worktable 14

FIG. 11

Mobile platform 300

Radar system 100

Information processing system 310

Electronic control system 320

FIG. 12

## INTERNATIONAL SEARCH REPORT

| | |
|---|---|
| International application No. | |
| | **PCT/CN2019/114873** |

**A.    CLASSIFICATION OF SUBJECT MATTER**

G01S 17/93(2020.01)i;   G02B 5/20(2006.01)i

According to International Patent Classification (IPC) or to both national classification and IPC

**B.    FIELDS SEARCHED**

Minimum documentation searched (classification system followed by classification symbols)

G01S; G02B

Documentation searched other than minimum documentation to the extent that such documents are included in the fields searched

Electronic data base consulted during the international search (name of data base and, where practicable, search terms used)

WPI; ; EPODOC; CNPAT; CNKI; IEEE: 透镜, 滤光, 滤波, 窄带, 像, 远心, 雷达, len?, narrow, filter+, telecentric, imag+, radar

**C.    DOCUMENTS CONSIDERED TO BE RELEVANT**

| Category* | Citation of document, with indication, where appropriate, of the relevant passages | Relevant to claim No. |
|---|---|---|
| X | CN 110049256 A (SHENZHEN SIRUISHI TECHNOLOGY CO., LTD.) 23 July 2019 (2019-07-23)<br>      description paragraphs 0026-0037, figures 1-2 | 1-16 |
| X | CN 109656006 A (XI'AN INSTITUTE OF OPTICS AND PRECISION MECHANICS, CAS) 19 April 2019 (2019-04-19)<br>      description paragraphs 0039-0046, figure 3 | 1-16 |
| A | US 2016200161 A1 (XENOMATIX NV) 14 July 2016 (2016-07-14)<br>      entire document | 1-16 |
| A | LI, Tian-Ze et al. "Study on the Treatment Technology and Application of Charge Coupled Device"<br>*2009 2nd International Congress on Image and Signal Processing,*<br>19 October 2019 (2019-10-19),<br>      entire document | 1-16 |
| A | 应家驹 等 (YING, Jiaju et al.). "全向激光告警系统的探测灵敏度分析 (Analysis of detective sensitivity for omni-directional laser warning system)"<br>*红外与激光工程 (Infrared and Laser Engineering),*<br>Vol. 37,, No. 6, 31 December 2008 (2008-12-31),<br>      entire document | 1-16 |

☐ Further documents are listed in the continuation of Box C.          ☑ See patent family annex.

| | |
|---|---|
| *      Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **14 July 2020** | **28 July 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2019/114873**

| Patent document cited in search report | | | Publication date (day/month/year) | Patent family member(s) | | | Publication date (day/month/year) |
|---|---|---|---|---|---|---|---|
| CN | 110049256 | A | 23 July 2019 | CN | 209562673 | U | 29 October 2019 |
| CN | 109656006 | A | 19 April 2019 | CN | 209417404 | U | 20 September 2019 |
| US | 2016200161 | A1 | 14 July 2016 | EP | 3045936 | A1 | 20 July 2016 |

Form PCT/ISA/210 (patent family annex) (January 2015)